# EUROPEAN PATENT APPLICATION

(11) **EP 1 604 748 A1**
(43) Date of publication of application: **14.12.2005**
(21) Application number: 04710481.5
(22) Date of filing: 12.02.2004
(51) Int. Cl.: B09B 3/00, C04B 18/16

(54) **METHOD OF TREATING WASTE GLASS**

(30) Priority: 14.02.2003 JP 2003037163
(71) Applicant: Japan Science and Technology Agency, Kawaguchi-shi, Saitama 332-0012 (JP)
(72) Inventor: MIYOSHI, H., Nat.Inst.of Adv Ind. Sce and Tech., Ikeda-sh (JP); AKAI, T., Nat. Inst. of Adv. Sce & Tech., Ideka-sh (JP); CHEN, D., Nat. Inst. of Adv. Sce & Tech., Ideka-sh (JP)
(74) Representative: Müller-Boré & Partner Patentanwälte
(86) International application number: PCT/JP2004/001483
(87) International publication number: WO 2004/071685

(57) **Abstract**

The present invention provides a method of treating waste glass comprising bringing waste glass into contact with hot steam or hot water under pressure. Using this method, a porous material with a high silicon oxide content that can be reused as a resource for general purposes can be obtained, without the addition of auxiliary raw materials, through a procedure which can be carried out at low cost.

## Description

### TECHNICAL FIELD

The present invention relates to a method of treating waste glass and to a porous material obtained thereby.

### BACKGROUND ART

Among waste glasses collected for recycling after being used as products, colorless glass bottles, brown glass bottles and the like are remelted as cullet and used as raw materials for producing new glass products. However, it is difficult to remelt and use all the collected waste glass as cullet because the use of only cullet as the glass raw material is unusual in view of composition control.

Furthermore, among waste glasses, glass products colored by addition of metal(s) such as cobalt, chromium and the like, waste glasses of uncertain composition, glass scrap generated during the production of glasses in factories, etc. cannot be used by being melted as cullet and are therefore discarded as waste, which causes environmental problems such as a shortage of waste disposal sites.

Techniques proposed for recycling such glasses currently discarded without being reused include methods of removing components other than silicon dioxide from glass, and methods of adding other components and processing.

Methods reported for removing components other than silicon dioxide include a method of recovering silicon dioxide from colored bottles by alkali fusion using sodium hydroxide (Hidetsugu Mori, "Recovery of silicon dioxide from industrial waste bottles by alkali fusion using sodium hydroxide", Abstracts for the 2001 Annual Conference of the Ceramic Society of Japan, the Ceramic Society of Japan, 2001, p.143), and a method comprising bringing waste glass into contact with an acidic gas to form a salt by the neutralization reaction between an alkaline component in the waste glass and an acidic component in the gas and removing the salt by washing with water (Japanese Unexamined Patent Publication No. 2002-284546).

These methods enable silicon dioxide contained as a principal component in waste glass to be recycled as a resource useful for general purposes, but require dealing with an acidic gas, an alkali or the like at high temperatures, thus being dangerous. Furthermore, since expensive acidic gases, alkalis, etc. are used, increased costs make these methods difficult to put into practical use, and these methods also pose problems such as energy consumption, wastewater discharge and like environmental burdens.

Another method proposed comprises melting a waste glass to which boric acid has been added, and treating the glass with an acid to revert to silicon dioxide (Tomoko Akai, et al., "Method of Recycling Waste Glass Using Ion Diffusion and Phase Separation", Abstracts for the 43^{rd} Glass and Photonics Material Symposium, the Ceramic Society of Japan, 2002, p.28). This method is a comparatively easy treatment, but further cost reduction is desired.

One method reported for processing glass containing additional components comprises adding a calcium material such as CaO or Ca(OH)₂ to glass scrap and molding the mixture by pressing, followed by heating under pressure using an autoclave or the like to harden by a hydrothermal reaction, thus forming a firm solid (Japanese Patent No. 2748206). Further, a quality improvement method comprising treating the surface of the calcium-containing solid obtained by hydrothermal reaction in a manner similar to the above method to prevent water absorption has been proposed (Japanese Unexamined Patent Publication No. 2000-327397). These methods generally have the advantage of low cost, but the obtained products are limited in application and cannot be reused as resources for general purposes. Furthermore, since large amounts of sodium, toxic heavy metals and the like remain in the calcium silicate hydrate obtained by the hydrothermal reaction, these may be leached out with time. For example, when calcium silicate hydrate formed by a hydrothermal reaction is used as an aggregate for cement, an alkali aggregate reaction occurs due to sodium leaching, which causes a reduction of strength. In addition, according to the above method, silicon dioxide contained as the principal component in waste glass cannot be repeatedly recycled as a resource.

### BRIEF DESCRIPTION OF THE DRAWINGS

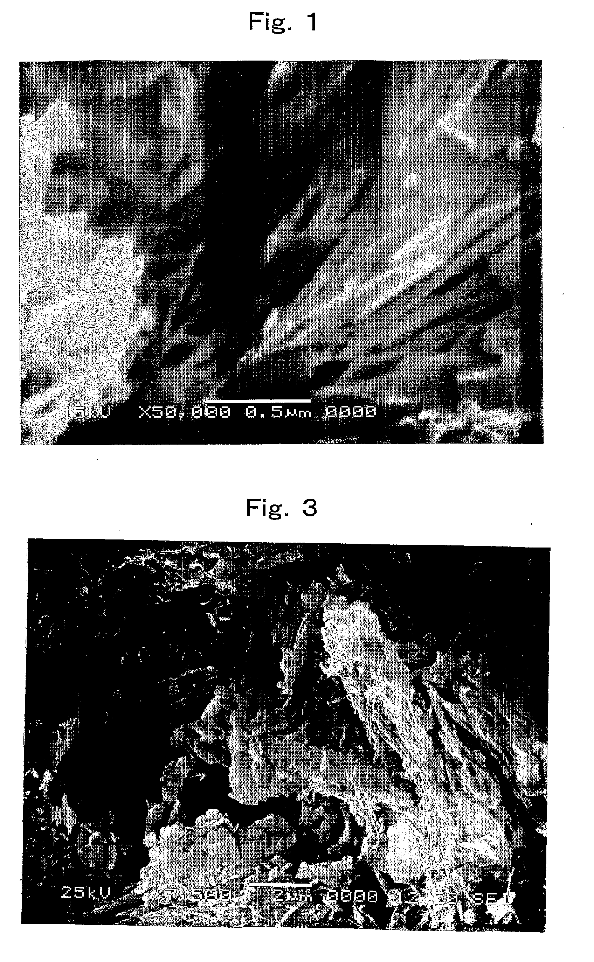

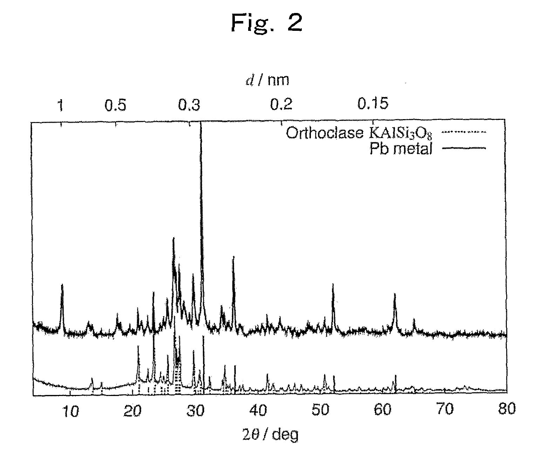

Fig. 1 is a scanning electron micrograph of the white solid obtained in Example 1. Fig. 2 is a diagram showing the X-ray diffraction pattern obtained in Example 3. Fig. 3 is the scanning electron micrograph obtained in Example 3.

### DISCLOSURE OF THE INVENTION

The present invention was made in view of the above state of the prior art. A primary object of the invention is to provide a method of treating waste glass so as to be recyclable as a resource for general purposes, which can be carried out practically at low cost and with a less environmental load.

The inventors of the present invention conducted extensive research to achieve the above object. As a result, the inventors found that when using a method comprising bringing waste glass into contact with hot steam or hot water under pressure, a porous material with a high silicon oxide content that can be recycled as a resource for general purposes can be obtained, without the addition of auxiliary raw materials, by a low-cost practical treatment method, and thereby accomplished the present invention.

The present invention provides the following methods of treating waste glass and porous materials obtained by the treatment methods.
1. A method of treating waste glass comprising bringing waste glass into contact with hot steam or hot water under pressure.
2. The method according to item 1 wherein the hot steam or hot water has a temperature of 120 to 450°C and a pressure of 0.2 to 101.3 MPa.
3. A method of treating waste glass comprising bringing the waste glass treated by the method of item 1 into contact with water or an aqueous acid solution.
4. A method of treating waste glass comprising treating waste glass by the method of item 3 and then recovering a metal from the water or aqueous acid solution used in the treatment.
5. A porous material obtained by the method of item 1.
6. An aggregate for cement comprising the porous material of item 5.
7. A porous material obtained by the method of item 3.

The method of treating waste glass according to the invention comprises bringing waste glass into contact with hot steam or hot water under pressure.

The kind of waste glass to be treated is not particularly limited. Examples of usable waste glasses include waste glasses collected after being used as glass products, and waste glasses generated in factories.

Among such waste glasses, examples of waste glasses collected after being used as products include glasses collected after being used as glass bottles such as colorless glass bottles, brown glass bottles, blue glass bottles and green glass bottles; automobile glasses such as automobile windshields and windowpanes; electric appliance glasses such as cathode ray tube glasses and liquid crystal panel glasses; and glasses for building materials such as window glasses. Examples of waste glasses generated in factories include glass scrap generated in float furnaces at the time of changing colors and/or composition during the production of glass in factories.

The method of the invention is extremely useful in that it can treat colored glass bottles such as blue glasses and green glasses; waste glasses of uncertain composition; waste glasses generated in float furnaces, etc. in factories; and the like among the above waste glasses, most of which have been discarded as waste.

The composition of the waste glass to be treated is not particularly limited. Waste glasses of uncertain composition and mixtures of various waste glasses can also be treated. For example, glasses with a SiO₂ content of about 30 to about 80 mass %, such as many commercially available glass products, can be treated. The contents of other components in the waste glass are not particularly limited. According to the method of the invention, even glasses containing sodium oxide as much as about 10 to about 20 mass % can be converted to a material useful for various purposes by greatly reducing the sodium content.

A preferable example of waste glass to be treated is commercially available soda lime glass bottles with a SiO₂ content of about 70 to about 73 wt.%.

Even when the waste glass contains labels, caps and like impurities, the treatment method of the invention does not need to be changed. Therefore, waste glass containing labels, caps and like impurities may also be used as raw materials, depending on the purpose of use of the silicon dioxide porous material obtained by the treatment.

In the method of the invention, the size, shape, etc. of the waste glass to be treated are not particularly limited and can be suitably selected according to the kind of waste glass, treatment conditions, etc.

For example, discarded waste glass may be used as is. However, the contact area between the waste glass and hot steam or hot water can be increased by pulverizing waste glass. As a result, water molecules can easily permeate into the glass, thereby shortening the treatment time.

The degree of pulverization of the waste glass can be suitably decided according to the treatment temperature, pressure, time, etc. It is usually preferable to adjust the particle diameter to about 10 mm or less, and more preferably to about 1 mm or less.

The method of pulverizing waste glass is not particularly limited. For example, pulverizing methods using commercially available industrial mills, and other commonly used pulverization methods can be suitably used.

The method of bringing waste glass into contact with hot steam or hot water under pressure is not particularly limited. Any method that can bring waste glass into contact with hot steam or hot water may be used. Waste glass may be brought into contact with both hot water and hot steam in an equilibrium state. Examples of usable methods include a method comprising placing water and waste glass in a pressure-resistant vessel and heating at a specified temperature under a specified pressure, and a method comprising passing hot water or hot steam that meets specific conditions through a vessel containing waste glass.

More specifically, waste glass may be brought into contact with hot steam or hot water, for example, using a reactor that can withstand high temperatures and high pressures.
In this case, temperature- and pressure-variable batch hermetic device is preferably used.

It is also possible to use flow type treatment devices in which the reaction proceeds while waste glass passes through a temperature- and pressure-variable reaction tube. When the waste glass is stationary and only water passes as a flow through a reaction tube, a large amount of water can be introduced into a small device, thus being effective for removing sodium or the like.

When a pressure of near-supercritical water is reduced, the solubility of sodium salts, etc. decreases. With the use of this property, hot water can be recycled by removing sodium. A system using such a property is highly effective because of low energy costs and a small amount of waste water discharge.

The hot steam or hot water to be brought into contact with waste glass preferably has a temperature of about 120 to about 450°C and a pressure of about 0.2 to about 101.3 MPa, and more preferably a temperature of about 230 to about 450°C and a pressure of about 3.0 to about 101.3 MPa. The treatment conditions can be suitably selected within the above-mentioned temperature and pressure ranges according to the size and composition of waste glass to be treated, the desired treatment time, etc.

More specifically, in the subcritical region, it is preferable that the temperature be at least 120°C and the pressure be at the same level as that of water vapor at the corresponding temperature. In the supercritical region (higher than 374.1°C and 22.1 MPa), a temperature of about 374.1 to about 450°C and a pressure of about 22.1 to about 101.3 MPa are preferable. The "supercritical region" herein means "at temperatures and pressures higher than the critical point of water (374.1°C and 22.1 MPa), and "subcritical region" means "at temperatures and pressures lower than the critical point of water".

For example, when waste glass with a high sodium oxide content is to be treated, the treatment can be performed at a relatively low temperature and low pressure within the above-mentioned ranges. Glass with a high silicon dioxide content is preferably treated at a high temperature and a high pressure due to its low reactivity with water.

The contact time of waste glass with hot steam or hot water may vary according to the kind, amount and size of waste glass, temperature, pressure, etc. and thus can be suitably decided according to the treatment conditions.

Generally, as the size, amount, etc. of waste glass increase, a longer treatment time becomes necessary. The higher are the temperature and pressure of the hot steam or hot water, the shorter is the treatment time. The treatment time is usually about 5 minutes to about 10 hours, but may be outside this range depending on the kind of glass to be treated, temperature and pressure.

The amount of hot steam and hot water used is not particularly limited and may be suitably decided according to the kind and amount of waste glass, treatment conditions, purpose of use of the obtained porous silicon dioxide, etc. It is usually preferable that the amount of hot steam and hot water be at least an amount such that it can spread over the entire waste glass, i.e., at least as much as the apparent volume of the waste glass. It is preferable in terms of energy costs that the amount be not more than 200 times the apparent volume of the waste glass.

Generally, the amount of hot steam and hot water may be reduced within this range to cut energy costs, and may be increased within such a range to reduce acid consumption in the post treatment process described below.

According to the above treatment method, a crystalline or amorphous porous material with a greatly reduced sodium content compared to the original waste glass can be obtained by a simple method comprising bringing the waste glass into contact with hot steam or hot water under pressure, without adding an alkali, acid or the like.

The mechanism of how such a porous material can be obtained by the method of the invention is not clear. However, for example, in the case of forming crystalline porous materials, waste glass is presumably converted to a porous material with a greatly reduced sodium content by the following process.

That is, water permeating into glass easily diffuses into glass at high temperatures, and particularly, water molecules easily permeates into glass at high pressures. Therefore, when glass is brought into contact with hot water or hot steam at high temperatures and high pressures, a large amount of water penetrates into the glass. Because of breakage of SiO₂ bonds by the penetrated water and other reasons, the glass structure readily changes. Known as typical glass structural changes are leaching, phase separation, crystal nucleation, crystal growth, etc. In particular, as crystal nucleation and crystal growth progress, the glass structure changes to microscopic crystals and components with a high content of sodium or the like are left between the crystals. Such components are leached out by hot water, resulting in a porous material with many voids between the crystals. In particular, since water in a subcritical or supercritical region very quickly diffuses and thus rapidly penetrates into the glass from the interface of crystals, the structural change progresses to a depth of several millimeters in a short time.

Presumably by utilizing such characteristics of high-temperature, high-pressure water, the structure of the waste glass changes and a porous material from which sodium, etc. have been removed is obtained.

In particular, when waste glass containing polyvalent ions such as calcium is treated to form a crystalline porous material, waste glass treatment proceeds efficiently. This is presumably because when waste glass containing polyvalent ions such as calcium is brought into contact with hot steam or hot water under pressure, stable crystals containing an appropriate size of polyvalent ions such as calcium are formed, so that crystal nucleation and growth can readily progress. In this case, although the calcium content of waste glass is not particularly limited, a calcium content of about 5 to 20 mass % as in normal soda lime glasses is preferable.

As described above, according to the present invention, waste glass can be treated merely by using high-temperature, high-pressure water without adding any alkali, acid, etc. Therefore, the treatment method of the invention has little adverse effects on the environment and can be carried out at low cost.

The obtained porous material has a greatly reduced sodium content, compared to the composition of the starting waste glass. Since such a porous material has a very low content of sodium that causes an alkali aggregate reaction, it can be used as is, for example, for an aggregate for cement.

The crystalline structure of the obtained porous material varies depending on the composition of the starting waste glass. For example, when soda lime glass is to be treated, calcium silicate may be partially formed. For example, when waste glass containing aluminum and potassium is to be treated, feldspar may be partially formed.

After waste glass is treated by the above method, the obtained porous material may, if necessary, be brought into contact with water or an aqueous acid solution as a post treatment. In the post treatment, the water or aqueous acid solution permeates into the microscopic voids in the porous material to thereby remove components other than silicon oxide, thus forming a highly pure porous material with a very high silicon content.

In particular, when an aqueous acid solution is used, an especially highly pure porous material can be obtained.

The kind of aqueous acid solution is not particularly limited. For example, aqueous solutions of strong acids such as nitric acid, sulfuric acid and hydrochloric acid and aqueous solutions of weak acids such as acetic acid can be used. To accelerate the reaction rate, an aqueous solution of a strong acid is preferably used. In particular, an aqueous solution of nitric acid is preferably used.

The concentration of the aqueous acid solution is not particularly limited and can be suitably decided according to the desired reaction rate. Generally, increased concentrations can accelerate the reaction rate and also reduce the amount of waste solution. When nitric acid is used, it is preferable in terms of ease of handling that the aqueous acid solution has a concentration of about 0.5 to about 16 mol/l, and more preferably a concentration of about 1 to about 4 mol/l.

When a cheap but low concentration acid such as nitrogen oxide discharged from a thermal power station can be available, cost reductions can be achieved by using such an acid.

The method of bringing the porous material obtained by treating waste glass into contact with water or an aqueous acid solution is not particularly limited. It can be performed, for example, by a method of adding water or an aqueous acid solution dropwise to the porous material, or a method of immersing the porous material in water or an aqueous acid solution.

The treatment temperature is usually from about room temperature to about 100°C, although it is not particularly limited.

The treatment time varies depending on the concentration of aqueous acid solution, kind of acid, treatment method, etc. When a method of adding an aqueous acid solution dropwise is used, the reaction time may be any time that ensures the permeation of the aqueous acid solution into the porous material. For example, the reaction time may be about 1 second or more, and preferably about 5 seconds or more. When a method of immersion in an aqueous acid solution is used, it is preferable in terms of treatment efficiency that the treatment time is not more than about 5 days, and more preferably about 1 day or less. However, the treatment time needs to be prolonged if an acid having a low concentration or a weak acid is used.

Unreacted acid after being brought into contact with the porous material can be recovered, concentrated and recycled.

Since the water or aqueous acid solution used in the post treatment step contains metal components contained in the waste glass, it is possible to recover and recycle the metal components. The method of recovering metal components may be appropriately selected from known methods.

The metals contained in the water or aqueous acid solution vary according to the kind of waste glass treated. Examples of such metals include cobalt used as a colorant for blue glasses; cerium, cadmium and the like used as colorants for yellow glasses; copper used as a colorant for blue, green or like glasses; chromium used as a colorant for green glasses; lead used in lead oxide-containing glasses for radiation shielding; and so on.

For example, recovering an expensive useful metal such as cobalt among the above metal components can achieve effective re-use of an expensive metal source. Recovering toxic metals such as cadmium and lead can reduce adverse effects on the environment.

Thus the treatment method of the invention is also very useful as a method of recovering toxic metals contained in waste glasses.

Post treatment using an aqueous acid solution or water can reduce, for example, the sodium content and also remove other metal components contained in the waste glass, thus further increasing the silicon content. As a result, a high-purity porous material can be obtained with a silicon content of at least about 80 mass %, preferably at least 90 mass %, more preferably at least 95 mass %, and particularly preferably at least 98 mass %, calculated as silicon dioxide.

The obtained porous material has a greatly reduced sodium content, compared to the untreated waste glass. More specifically, the sodium content of the obtained porous material may be reduced, depending on the treatment conditions, to 10 mass % or less, preferably 5 mass % or less, and further preferably 1 mass % or less, calculated as sodium oxide.

The obtained porous material has pores with a diameter of about 10 nm to about 5 µm, as shown in Fig. 1 of Example 1 described below.

The porous material obtained by the above treatment method has a very high silicon content and a very low content of other components. The porous material can be effectively used as a resource useful for general purposes such as a glass raw material, ceramic raw material and the like. Further, the porous material can be used for adsorbents, catalyst carriers, heat insulating materials and like general uses of porous materials.

The porous material has such a low sodium content that an alkali aggregate reaction due to sodium leaching does not occur when the material is used as an aggregate for cement. Therefore, it is also very useful as an aggregate material for cement.

As described above, according to the present invention, a porous material with a high silicon content recyclable as a resource for general purposes can be obtained by a low-cost practical method of treatment using, as a starting material, waste glass currently discarded because of its uncertain composition, without adding auxiliary raw materials.

### BEST MODE FOR CARRYING OUT THE INVENTION

Examples are given below to illustrate the present invention in more detail.

### Example 1

Glass containing 16 mass % of sodium oxide (Na₂O), 12 mass % of calcium oxide (CaO), 0.5 mass % of cobalt oxide (CoO), and 71.5 mass % of silicon dioxide (SiO₂) was melted at 1400°C for 4 hours, followed by cooling to provide a blue glass rod with a diameter of about 1 mm. This glass was used as a waste glass specimen and subjected to the following treatment.

First, 0.25 g of the waste glass and 40 g of water were placed in an alumina tube with an internal volume of 17 ml. The alumina tube was placed in a platinum-lined autoclave made of Inconel alloy (internal volume 100 ml). The waste glass was in an immersed state in water.

The waste glass was heated to 309°C (pressure 11 MPa) and the heating was stopped after 5 hours. The resulting mixture was allowed to stand and cool, thus giving a white solid and solution.

The obtained white solid was dried and observed using a scanning electron microscope. Fig. 1 shows a scanning electron micrograph, together with a 0.5-micrometer scale bar.

As is clear from the micrograph of Fig. 1, the surface of the white solid has a structure comprising piles of plate crystals with a thickness of about 0.1 µm and a length of about 1 µm, with many voids therebetween. This result confirms that the homogenous glass had been converted to a porous material. The pores of the porous material had a diameter of about 10 nm to about 1 µm.

Further, the chemical composition was analyzed using an X-ray analytical device, EDS, attached to the scanning electron microscope. Table 1 below shows the results of the EDS analysis.

**Table 1**

| Element | (keV) | Mass % | Error % | Atom % | Compound | Mass % | K |
|---|---|---|---|---|---|---|---|
| O | 0.000 | 46.04 | 0.00 | 0.00 | | 0.00 | 0.0000 |
| NaK | 1.041 | 0.74 | 0.35 | 3.35 | Na₂O | 1.00 | 1.0202 |
| AlK | 1.486 | 0.84 | 0.35 | 1.81 | Al₂O₃ | 1.59 | 1.2967 |
| Sik | 1.739 | 32.59 | 0.39 | 60.50 | SiO₂ | 69.71 | 56.5588 |
| CaK | 3.690 | 19.79 | 0.52 | 34.34 | CaO | 27.70 | 39.5806 |
| Total | | 100.00 | | 100.00 | | 100.00 | |

As is clear from the results shown in Table 1, the porous material after treatment had a sodium content of about 1 mass %, calculated as sodium oxide, which is a greatly reduced value compared to the untreated glass. Although the calcium oxide percentage increased, this is only a relative increase caused by leaching of sodium readily soluble in water.

The obtained solution was analyzed. The results showed that the solution contained sodium and silicon, and it was revealed that a thin solution of water glass was obtained. Although aluminum not contained in the waste glass was detected, this appears to be derived from the alumina tube used to avoid damage to the container.

Subsequently, 20 parts by weight of a 5-fold diluted aqueous solution of commercially available concentrated nitric acid (concentration 69%) was added dropwise to 1 part by weight of the white solid obtained by the above method at room temperature to moisten the entire solid, followed by allowing the mixture to stand for 1 day. The resulting mixture was then filtered and washed with water, followed by drying at 100°C for 5 hours. The resulting product was analyzed using EDS. Table 2 below shows the results of the EDS analysis.

**Table 2**

| | (keV) | Mass % | Error % | Atom % | Compound | Mass % | K |
|---|---|---|---|---|---|---|---|
| O | 0.000 | 52.96 | 0.00 | 0.00 | | 0.00 | 0.0000 |
| NaK | 1.041 | 0.05 | 0.37 | 0.28 | Na₂O | 0.07 | 0.0929 |
| AlK | 1.486 | 0.63 | 0.37 | 1.51 | Al₂O₃ | 1.17 | 1.1635 |
| Sik | 1.739 | 45.78 | 0.43 | 97.05 | SiO₂ | 97.94 | 95.7000 |
| CaK | 3.690 | 0.58 | 0.61 | 1.16 | CaO | 0.82 | 1.3273 |
| Total | | 100.00 | | 100.00 | | 100.00 | |

The results of Table 2 show that a high-purity porous material with a silicon content of 98%, calculated as silicon dioxide, was obtained by the post treatment using an aqueous nitric acid solution. In consideration of accuracy and properties of EDS analysis, the silicon dioxide content can be considered to be nearly 100%.

Five parts by weight of commercially available concentrated nitric acid was added dropwise to 1 part by weight of the white solid obtained by the above method to moisten the entire solid, followed by allowing the mixture to stand for 1 day. The resulting mixture was then filtered and washed with water, followed by drying at 100°C for 5 hours. The resulting product was analyzed using EDS.

The results show that a high-purity porous material with a silicon content of 99%, calculated as silicon dioxide, was obtained.

One part by weight of the above obtained white solid was treated with 5 parts by weight of concentrated nitric acid. A portion of the acid solution after this treatment was analyzed using ICP (plasma luminescence). The results showed that at least 50% of the cobalt contained in the waste glass before the treatment had been removed by just this post treatment step.

Since the silicon dioxide porous material prior to the post treatment with nitric acid was white or translucent, it appears that about 95% of the cobalt was recovered by the entire process.

Cobalt can be easily recovered from the waste acid solution by a known method such as precipitation. Thus the treatment method of the invention is suitable as a cobalt recovery treatment.

### Example 2

Glass containing 16 mass % of sodium oxide (Na₂O), 12 mass % of calcium oxide (CaO), 0.1 mass % of cobalt oxide (CoO), and 71.9 mass % of silicon dioxide (SiO₂) was melted at 1400°C for 4 hours, followed by cooling and annealing to provide a blue glass. This glass was pulverized with a hammer to a size that passes through a 0.42 mm sieve. The pulverized glass was used as a waste glass specimen and subjected to the following treatment.

First, 5.73 g of the waste glass and 60 g of water were placed in a graphite tube. The graphite tube was placed in a platinum-lined autoclave made of Inconel alloy (inner volume: 100 ml). The waste glass was in an immersed state in water.

The waste glass was heated. When the temperature and pressure reached 359°C and 22 MPa, the heating was stopped, followed by allowing the mixture to stand and cool to give a white solid and solution.

The white solid thus obtained was dried and the chemical composition was analyzed.

The results show that the sodium content was reduced to 9.7%, calculated as sodium oxide.

Subsequently, 20 parts by weight of a 5-fold diluted aqueous solution of commercially available concentrated nitric acid (concentration 69%) was added dropwise to 1 part by weight of the obtained white solid at room temperature to moisten the entire solid, followed by allowing the mixture to stand for 1 day. The resulting mixture was then filtered and washed with water, followed by drying at 100°C for 5 hours. The resulting product was analyzed by an atomic absorption spectrophotometry method according to JIS R3101 and R3105.

The results showed that the resulting product contained 0.004% cobalt, 0.12% calcium, and 0.14% sodium, expressed as weight percent of each element, so that the content of each element was reduced by the following percentages: cobalt by 94%, sodium by 99%, and calcium by 99%.

### Comparative Example 1

The waste glass specimen used in Example 1 was brought into contact with 100°C hot water at atmospheric pressure for 5 hours. No striking changes were observed with the naked eye.

### Example 3

A glass rod with a diameter of 0.5 mm comprising 53 mass % of SiO₂, 23 mass % of PbO, 8 mass % of K₂O, 6 mass % of Na₂O, 4 mass % of CaO, 2 mass % of MgO and 4 mass % of Al₂O₃ was used as a waste glass specimen and treated by the following method. The composition of this specimen imitated the composition of glasses with high lead contents used for the funnel portions in commercially available color television cathode ray tubes.

First, the waste glass specimen was placed in a tubular autoclave and heated until the vicinity of the sample reached a temperature of 380°C. Hot water was fed from one end of the autoclave and the pressure was increased to 28 MPa. After about 7 hours, water was drained and the pressure was returned to atmospheric pressure, followed by allowing it to cool. As a result, a leaden-colored glass was obtained.

This sample was subjected to powder X-ray diffraction using Cu-K_{α} ray. Fig. 2 shows the X-ray diffraction pattern. Fig. 2 clearly shows that the waste glass specimen had changed to a crystalline phase, and peaks for orthoclase (KAlSi₃O₈) and Pb generated by reduction and other peaks were observed. Fig. 3 shows a scanning electron micrograph of this sample. As clearly shown in Fig. 3, lamellar microcrystals as often seen in phyllosillicates were observed.

The sample was immersed in 1.55N dilute nitric acid and allowed to stand at 100°C for 15 hours, followed by washing with water. The composition was then analyzed using EDS attached to the scanning electron microscope. Table 3 below shows the results. The numerical values shown in the table are expressed as wt.%, calculated as oxides. The values for MgO, Na₂O, CaO and PbO after acid treatment, which are below the lowest accurately measurable limit for quantification by EDS, would appear to be unreliable.

**Table 3**

| | SiO₂ | Al₂O₃ | K₂O | MgO | Na₂O | CaO | PbO |
|---|---|---|---|---|---|---|---|
| Before treatment | 49.57 | 5.11 | 4.64 | 1.76 | 9.65 | 2.38 | 29.89 |
| After hydrothermal treatment | 53.11 | 1.98 | 5.04 | 2.43 | 5.83 | 2.79 | 28.83 |
| After acid treatment | 83.77 | 8.34 | 6.89 | 0.27 | 0.24 | 0.32 | 0.17 |

As is clear from Table 3, the porous material after the treatment had a greatly increased silicon content, calculated as silicon dioxide, and had toxic lead reduced to below the lowest quantitatively measurable limit by EDS. A chemical analysis was carried out by an atomic absorption spectrophotometry method and the results show that the residual amount of lead was 0.95%, calculated as the weight percent of the element. This result confirms that the treatment method of the invention is useful as a method of removing toxic metals from waste glass.

## Claims

1. A method of treating waste glass comprising bringing waste glass into contact with hot steam or hot water under pressure.

2. The method according to claim 1 wherein the hot steam or hot water has a temperature of 120 to 450°C and a pressure of 0.2 to 101.3 MPa.

3. A method of treating waste glass comprising bringing the waste glass treated by the method of claim 1 into contact with water or an aqueous acid solution.

4. A method of treating waste glass comprising treating waste glass by the method of claim 3 and then recovering a metal from the water or aqueous acid solution used in the treatment.

5. A porous material obtained by the method of claim 1.

6. An aggregate for cement comprising the porous material of claim 5.

7. A porous material obtained by the method of claim 3.
